Europäisches Patentamt

European Patent Office

Office européen des brevets

(11) Veröffentlichungsnummer: **0 367 028**
**A2**

(12) # EUROPÄISCHE PATENTANMELDUNG

(21) Anmeldenummer: **89119373.2**

(22) Anmeldetag: **19.10.89**

(51) Int. Cl.5: **G01N 1/28 , F25B 9/00**

(30) Priorität: **29.10.88 DE 3836884**

(43) Veröffentlichungstag der Anmeldung:
**09.05.90 Patentblatt 90/19**

(84) Benannte Vertragsstaaten:
**AT BE CH DE FR GB IT LI NL**

(71) Anmelder: **LEYBOLD AKTIENGESELLSCHAFT**
**Wilhelm-Rohn-Strasse 25**
**D-6450 Hanau 1(DE)**

(72) Erfinder: **Sous, Hans-Dieter**
**Heinrichstrasse 15**
**D-5042 Erftstadt 13(DE)**
Erfinder: **Strasser, Wilhelm**
**Reiser 9**
**D-5060 Bergisch-Gladbach 1(DE)**
Erfinder: **Voss, Gerhard, Dr.**
**Hebbelstrasse 74**
**D-5000 Köln 51(DE)**

(74) Vertreter: **Leineweber, Jürgen, Dipl.-Phys.**
**Nagelschmiedshütte 8**
**D-5000 Köln 40(DE)**

(54) **Verfahren und Untersuchung einer auf dem Kaltkopf eines Kryostaten befindlichen Probe und Einrichtung dazu.**

(57) Die Erfindung bezieht sich auf ein Verfahren zur Untersuchung einer auf dem Kaltkopf eines Kryostaten befindlichen Probe mit Hilfe einer Meßeinrichtung, wobei der Kryostat (1) mit einem Refrigerator (3) betrieben wird, dem Einrichtungen (20, 28) zur Steuerung der Bewegung seines oder seiner Verdränger (16, 17) sowie zur Steuerung der Versorgung des oder der Arbeitsräume (14, 15) mit Arbeitsgas zugeordnet sind; um Beeinträchtigungen von Messungen an oder mit der Probe durch Erschütterungen infolge der Verdrängerbewegungen zu vermeiden, wird vorgeschlagen, daß der der Untersuchung der Probe dienende Meßprozeß in Zeitintervallen durchgeführt wird, in denen sich der Verdränger im wesentlichen in Ruhe oder in gleichförmiger Bewegung befindet.

FIG.1

## Verfahren zur Untersuchung einer auf dem Kaltkopf eines Kryostaten befindlichen Probe und Einrichtung dazu

Die Erfindung bezieht sich auf ein Verfahren zur Untersuchung einer auf dem Kaltkopf eines Kryostaten befindlichen Probe mit Hilfe einer Meßeinrichtung, wobei der Kryostat mit einem Refrigerator betrieben wird, dem Einrichtungen zur Steuerung der Bewegung seines oder seiner Verdränger sowie zur Steuerung des oder der Arbeitsräume mit Arbeitsgas zugeordnet sind. Außerdem bezieht sich die Erfindung auf einen für die Durchführung dieses Verfahrens geeigneten Refrigerator-Kryostaten.

Unter einem Kryostaten wird eine Einrichtung verstanden, welche die Einstellung und Aufrechterhaltung vorzugsweise tiefer Temperaturen (z. B. im Bereich von 10 K bis 250 K) erlaubt. Aus der DE-OS 30 46 458 ist ein Kryostat dieser Art bekannt. In Höhe der Probe sind fensterartige Öffnungen vorgesehen, die eine Untersuchung der Probe (z. B. auf optische Eigenschaften durch Reflexions- und Transmissionsmessungen) oder eine Verwendung der Probe als Detektor (z. B. Infrarot-Detektor) ermöglichen. Ebenso ist bei anderen Aufbauten die Aufnahme von Gammastrahl-Detektoren möglich.

Kryostaten können mit den verschiedensten Kältequellen arbeiten. Eine Möglichkeit besteht darin, flüssiges Helium zu verwenden. Der Betrieb von Kältequellen dieser Art ist aufwendig und kostspielig. In der DE-OS 30 46 458 ist offenbart, den Kryostaten mit einem Refrigerator zu betreiben. Refrigeratoren sind Kältemaschinen mit mindestens einem Verdränger und einem Zylinder. Dem Verdränger ist ein Antrieb zugeordnet, der z. B. pneumatisch (DE-OS 33 13 506) oder mechanisch (US-PS 32 14 924) gestaltet sein kann. Der Zylinder wird in bestimmter Weise alternierend mit einer Hochdruck-Gas-Quelle und einer Niederdruck-Gas-Senke verbunden, so daß während der Hin- und Herbewegung des Verdrängers ein thermodynamischer Kreisprozeß (Stirling-Prozeß, Gifford/McMahon-Prozeß usw.) abläuft. Dabei kann das Arbeitsgas in einem geschlossenen Kreislauf geführt werden. Die Folge ist, daß einem bestimmten Bereich des Zylinders Wärme entzogen wird. Mit zweistufigen Refrigeratoren, die nach dem Gifford/McMahon-Prinzip arbeiten, und Helium als Arbeitsgas lassen sich Temperaturen bis unter 10 K erzeugen.

Bei Kryostaten dieser Art ist die Probe auf dem Refrigerator-Kaltkopf gehaltert. Die reproduzierbare Einstellung höherer Temperaturen erfolgt z. B. durch elektrisches Gegenheizen.

Da die Probe aus Gründen eines guten Wärmekontaktes bei den meisten Anwendungsfällen fest mit dem Refrigerator-Kaltkopf verbunden ist, ist es unvermeidbar, daß sich von der Verdrängerbewegung verursachte Schwingungen oder Erschütterungen auf die Probe übertragen. Die an oder mit der Probe durchgeführten Messungen werden beeinträchtigt.

Der vorliegenden Erfindung liegt die Aufgabe zugrunde, ein Verfahren der eingangs genannten Art vorzuschlagen, bei dem die Messungen nicht mehr durch Erschütterungen aufgrund der Verdrängerbewegung beeinträchtigt sind.

Erfindungsgemäß wird diese Aufgabe dadurch gelöst, daß der der Untersuchung dienende Meßprozeß in Zeitintervallen durchgeführt wird, in denen sich der Verdränger im wesentlichen in Ruhe oder in gleichförmiger Bewegung befindet. Nur in diesen Zeitintervallen sind die von der Verdrängerbewegung herrührenden Vibrationen minimal oder nicht vorhanden.

Es besteht die Möglichkeit, den im Refrigerator ablaufenden Kälteerzeugungsprozeß und den durchzuführenden Meßprozeß zeitlich voneinander zu trennen. Wird der Verdränger z. B. periodisch in einem seiner Totpunkte angehalten, dann kann in dieser Zeit der gewünschte Meßprozeß ablaufen. Erschütterungen aufgrund der Verdrängerbewegungen treten in dieser Zeit nicht auf.

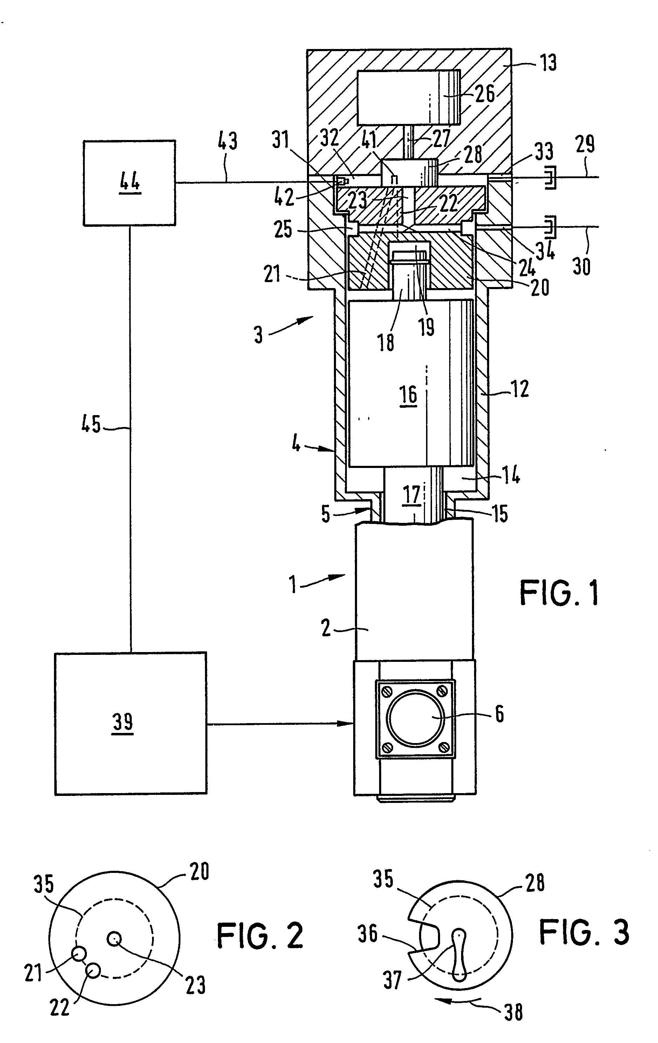

Weitere Vorteile und Einzelheiten der Erfindung sollen anhand der Figuren 1 bis 3 erläutert werden. Es zeigen:

- Figur 1 einen Teilschnitt durch einen Kryostaten nach der Erfindung, betrieben mit einer Refrigerator, - Figur 2 eine Daraufsicht auf ein Bauteil des Refrigerators mit Steueröffnungen und - Figur 3 eine Ansicht derjenigen Stirnseite eines Steuerventils, die den Steueröffnungen nach Figur 2 zugeordnet ist.

Der in Figur 1 dargestellte Refrigerator-Kryostat 1 weist das nur teilweise dargestellte Gehäuse 2 auf. Innerhalb des Gehäuses 2 ist der zweistufige Refrigerator 3 untergebracht, dessen Stufen mit 4 und 5 bezeichnet sind. Auf dem nicht sichtbaren Kaltkopf der zweiten Stufe 5 befindet sich die auf tiefe Temperaturen abzukühlende Probe. In Höhe der Probe ist das Gehäuse 2 mit einem oder mehreren Fenstern 6 ausgerüstet, die eine Untersuchung der Probe oder eine Verwendung der Probe als Detektor ermöglichen.

Der der Erzeugung der tiefen Temperaturen dienende Refrigerator 3 ist schematisch im Schnitt dargestellt. Sein Gehäuse besteht aus den beiden Teilen 12 und 13. Im Gehäuseteil 12 befinden sich die zylindrischen Arbeitsräume 14 und 15 für die beiden miteinander gekoppelten Verdränger 16 und 17. ·

Der obere Verdränger 16 ist mit einem Antriebskolben 18 ausgerüstet, dessen zugehöriger Zylinder 19 in einer Führungsbuchse 20 untergebracht ist. Diese Führungsbuchse 20 schließt den Arbeitsraum 14 zum Gehäuseteil 3 hin ab. Die Führungsbuchse 20 ist mit Bohrungen 21, 22 und 23 ausgerüstet. Die Bohrung 21 mündet in den Arbeitsraum 14 und dient der Versorgung dieses Raumes mit Arbeitsgas. Die Bohrung 23 mündet in eine Querbohrung 24, die mit einer Ringnut 25 in der Außenwandung der Führungsbuchse 20 verbunden ist. Die durch eine strichpunktierte Linie angedeutete Bohrung 22 dient dem pneumatischen Antrieb der Verdränger 16 und 17. Die verschiedenen Bohrungen liegen in von der Zeichenebene unterschiedlichen Ebenen, so daß sie miteinander nicht kreuzen, was durch die Strichelung bzw. Strichpunktierung angedeutet ist.

Im Gehäuseteil 13 ist der Steuermotor 26 untergebracht, der über die Welle 27 das Steuerventil 28 betätigt. Dieses Steuerventil 28 dient in bekannter Weise der Versorgung der Bohrungen 21 und 22 mit unter Hochdruck oder unter Niederdruck stehendem Arbeitsgas bzw. Helium.

Die Anschlüsse für das Hochdruck- und das Niederdruckarbeitsgas sind mit 29 bzw. 30 bezeichnet. Die Trennebene 31 zwischen den Gehäuseteilen 12 und 13 liegt in Höhe des Steuerventiles 28. Oberhalb der Führungsbuchse 20 ist ein flacher, im wesentlichen topfförmiger Raum 32 vorhanden, in die Bohrungen 21 bis 23 unterhalb des Steuerventiles 28 münden. In Höhe des Raumes 32 ist eine die Wandung des Gehäuseteiles 12 durchsetzende Bohrung 33 vorgesehen, die den Raum 32 mit dem Hochdruckanschluß 29 verbindet. Der Niederdruckanschluß 30 ist an die Bohrung 34 im Gehäuseteil 13 angeschlossen, welche in die Ringnut 25 der Führungsbuchse 20 mündet.

Figur 2 zeigt eine Draufsicht auf die Führungsbuchse 20 mit der zentralen Mündung der Bohrung 23 und den auf der Kreislinie 35 liegenden Mündungen der Bohrungen 21 und 22. Das Steuerventil 28 ist mit einer peripheren Aussparung 36 versehen, die die Kreislinie 35 übergreift. Weiterhin ist in der der Führungsbuchse 20 aufliegenden Stirnfläche des Steuerventiles 28 eine Aussparung 37 vorgegeben, die sich von Zentrum bis zur Kreislinie 35 erstreckt.

Rotiert das Steuerventil 28 in Richtung des eingezeichneten Pfeils 38, dann werden die Steueröffnungen 21 und 22 über die Aussparung 36 mit dem Raum 32 verbunden, in dem das Arbeitsgas unter Hochdruck vorliegt. Mit Hilfe der Aussparung 37 erfolgt eine Verbindung der Bohrungen 21 und 22 mit der zentralen Mündung der Bohrung 23, also mit den unter Niederdruck stehenden Arbeitsgasen.

Die Anordnung und Ausbildung der Aussparungen 36 und 37 sind so getroffen, daß das Verdrängersystem 16, 17 bei jeder Umdrehung des Steuerventiles 28 eine Hin- und Herbewegung ausführt. Die Aussparungen 36, 37 sind in einem Winkel von 90° zueinander angeordnet. Zunächst überstreicht die Aussparung 36 die Bohrungen 22 und 21, so daß sowohl in den Antriebszylinder 19 als auch in den Arbeitsraum 14 Arbeitsgas unter Hochdruck einströmt. Das Verdrängersystem 16, 17 führt eine Bewegung nach unten aus. Nach einer Drehung des Steuerventiles 28 um 90° überstreicht die Aussparung 37 die Bohrungen 22 und 21. Arbeitsraum 14 und Antriebsraum 19 werden dadurch mit der Niederdruckseite verbunden. Die Folge ist eine Bewegung des Verdrängersystems 16, 17 nach oben. Diese Bewegung ist abgeschlossen, wenn sich das Steuerventil 28 um ca. 90° weitergedreht hat. Eine Bewegung des Verdrängersystemes 16, 17 nach unten erfolgt erst wieder nach einer Drehung des Steuerventiles 28 um weitere 180°, d. h. daß das Verdrängersystem 16, 17 in der Zwischenzeit in Ruhe ist. Während dieser Zeit treten durch die Verdrängerbewegung erzeugte Erschütterungen an der Probe nicht auf. Während dieser Zeit durchgeführte Messungen an oder mit der Probe sind deshalb nicht beeinträchtigt.

Für den Fall, daß das Steuerventil 28 eine Umdrehung pro Sekunde ausführt, befindet sich das Verdrängersystem 16, 17 jeweils für eine halbe Sekunde in Bewegung und für eine halbe Sekunde in Ruhe.

In Figur 1 ist eine der Probe zugeordnete Meßeinrichtung generell als Block 39 dargestellt. Um den Meßprozeß in Abhängigkeit von der Verdrängerbewegung bzw. vom Verdrängerstillstand starten zu können, ist es zweckmäßig, ein Triggersignal zu erzeugen. Eine Möglichkeit dafür ist in Figur 1 dargestellt. Bei dieser Ausführungsform ist das Steuerventil 28 auf seiner Peripherie mit einer lichtreflektierenden Markierung 41 ausgerüstet. Im Raum 32 sind eine Lichtquelle und ein Sensor angeordnet. Nur ein Sensor 42 ist dargestellt.

Die Anordnung der Lichtquelle und des Sensors 42 sowie die Anordnung der Markierung 41 sind so getroffen, daß dem Sensor unmittelbar nach der Hin- und Herbewegung des Verdrängersystemes 16, 17 ein Lichtsignal zugeführt wird. Der Sensor 42 wandelt dieses Signal in ein elektrisches Signal um und führt es über die Leitung 43 dem Verstärker 44 zu. Verstärker 44 und Meßeinrichtung 39 sind über die Leitung 45 miteinander verbunden, über die das verstärkte Signal der Meßeinrichtung 39 zugeführt und dort als Triggersignal verwendet werden kann.

Die Erfindung ist vorstehend anhand eines Kryostaten beschrieben worden, der mit Hilfe eines zweistufigen, pneumatisch angetriebenen Refrigerators betrieben wird. Der Steuerung der Hochdruck-und Niederdruck-Gaszufuhr dient ein Drehventil. Es ist bekannt, an Stelle des Drehventils mehrere Magnetventile zu verwenden. Bei einer solchen Ausführungsform kann z. B. als den Meßprozeß steuerndes Triggersignal eines der Signale verwendet werden, das ein Magnetventil ansteuert.

**Ansprüche**

1. Verfahren zur Untersuchung einer auf dem Kaltkopf eines Kryostaten befindlichen Probe mit Hilfe einer Meßeinrichtung, wobei der Kryostat (1) mit einem Refrigerator (3) betrieben wird, dem Einrichtungen (20, 28) zur Steuerung der Bewegung seines oder seiner Verdränger (16, 17) sowie zur Steuerung der Versorgung des oder der Arbeitsräume (14, 15) mit Arbeitsgas zugeordnet sind, dadurch gekennzeichnet, daß der der Untersuchung der Probe dienende Meßprozeß in Zeitintervallen durchgeführt wird, in denen sich der Verdränger im wesentlichen in Ruhe oder in gleichförmiger Bewegung befindet.

2. Verfahren zur Untersuchung einer auf dem Kaltkopf eines Kryostaten befindlichen Probe mit Hilfe einer Meßeinrichtung, wobei der Kryostat (1) mit einem ein- oder zweistufigen Refrigerator (3) betrieben wird, dem Einrichtungen (20, 28) zur Steuerung der Bewegung seines oder seiner Verdränger (16, 17) sowie zur Steuerung der Versorgung des oder der Arbeitsräume (14, 15) mit Arbeitsgas zugeordnet sind, dadurch gekennzeichnet, daß der im Refrigerator (3) ablaufende Kälteerzeugungsprozeß und der durchzuführende Meßprozeß zeitlich voneinander getrennt werden.

3. Verfahren nach Anspruch 1 oder 2, dadurch gekennzeichnet, daß die Bewegung des oder der Verdränger (16, 17) vorzugsweise periodisch unterbrochen wird und daß die Messungen nur dann durchgeführt werden, wenn sich der Verdränger in Ruhe befindet.

4. Verfahren nach Anspruch 3, dadurch gekennzeichnet, daß der oder die Verdränger (16, 17) in einem ihrer Totpunkte für die Durchführung des Meßprozesses angehalten werden.

5. Verfahren nach Anspruch 3 oder 4, dadurch gekennzeichnet, daß die Meßphasen und die Verdrängerbewegungsphasen einander abwechseln und etwa gleich lang sind.

6. Verfahren nach einem der vorhergehenden Ansprüche, dadurch gekennzeichnet, daß zur Steuerung des Meßprozesses Signale dienen, die den Einrichtungen (20, 28) zur Steuerung der Bewegung des oder der Refrigeratorverdränger (16, 17) entnommen werden.

7. Verfahren nach Anspruch 6, bei dem zur Steuerung der Hochdruck- und Niederdruck-Gaszufuhr zur Refrigerator Magnetventile verwendet werden, dadurch gekennzeichnet, daß als den Meßprozeß steuerndes Triggersignal eines der Signale verwendet wird, das ein Magnetventil ansteuert.

8. Refrigerator-Kryostat zur Durchführung des Verfahrens nach einem der vorhergehenden Ansprüche mit einem oder mehreren Verdrängern (16, 17) und mit Mitteln (20, 28) zur Steuerung der Verdrängerbewegung sowie der Versorgung der Arbeitsräume (14, 15) mit Arbeitsgas, dadurch gekennzeichnet, daß die Steuermittel (20, 28) derart ausgebildet sind, daß sich der oder die Verdränger (16, 17) zeitweise, vorzugsweise periodisch, in Ruhe befinden.

9. Refrigerator-Kryostat nach Anspruch 8, dadurch gekennzeichnet , daß die Steuermittel ein rotierendes Steuerventil (28) mit Aussparungen (36, 37) umfassen, welche die dem Durchtritt von Arbeitsgas dienenden Bohrungen (21, 22, 23) derart zeitweise öffnen und verschließen, daß der oder die Verdränger zeitweise in Ruhe sind.

10. Refrigerator-Kryostat nach Anspruch 9, dadurch gekennzeichnet , daß das rotierende Steuerventil (28) der Erzeugung eines Triggersignales dient.

11. Refrigerator-Kryostat nach Anspruch 10, dadurch gekennzeichnet , daß zur Erzeugung eines Triggersignales eine Lichtquelle und ein Sensor (42) vorgesehen sind und daß das Steuerventil (28) peripher mit einer reflektierenden Markierung (41) ausgerüstet ist.

EP 0 367 028 A2

FIG. 1

FIG. 2

FIG. 3

88.028